# EUROPEAN PATENT APPLICATION

(11) **EP 3 076 664 A1**
(43) Date of publication of application: **05.10.2016**
(21) Application number: 16153087.8
(22) Date of filing: 28.01.2016
(51) Int. Cl.: H04N 5/76, G11B 27/00, H04N 5/783

(54) **METHOD AND DEVICE FOR CONTROLLING PLAYING AND ELECTRONIC EQUIPMENT**

(30) Priority: 31.03.2015 CN 201510149222
(71) Applicant: Xiaomi Inc., Beijing 100085 (CN)
(72) Inventor: TANG, Mingyong, 100085 Haidian District Beijing (CN); LIU, Huayijun, 100085 Haidian District Beijing (CN); CHEN, Tao, 100085 Haidian District Beijing (CN)
(74) Representative: Robson, Aidan John

(57) **Abstract**

The present disclosure relates to a method for controlling playing a video file, a device for controlling playing a video file, and an electronic equipment. The method includes: obtaining a video file (102); determining (104) whether a subject shot in the video file satisfies a predefined condition of variable speed replay; if yes, replaying (106) the video file at a variable speed.

## Description

### TECHNICAL FIELD

The present disclosure relates to a field of wearable technology, and more particularly, to a method for controlling playing a video file, a device for controlling playing a video file, and an electronic equipment.

### BACKGROUND

With the development of science and technology, more and more wearable devices appear, such as smart bracelets, smart glasses and the like. Hence, it is a problem to be tackled on how to utilize hardware features of the wearable devices to facilitate people's daily life.

### SUMMARY

Embodiments of the present disclosure provide a method for controlling playing a video file, a device for controlling playing a video file, and an electronic equipment, so as to solve the defects in the related art.

According to a first aspect of embodiments of the present disclosure, there is provided a method for controlling playing a video file. The method includes: obtaining a video file; determining whether a subject shot in the video file satisfies a predefined condition of variable speed replay; if yes, replaying the video file at a variable speed.

Alternatively, the step of obtaining the video file includes: invoking a camera of a device to shoot the subject; or receiving the video file obtained by shooting the subject by a camera of another device.

Alternatively, the step of determining whether the subject shot in the video file satisfies the predefined condition of variable speed replay includes: obtaining a motion feature parameter of the subject shot; determining whether a motion intensity of the subject shot belongs to a preset intensity range according to the motion feature parameter, if yes, determining that the subject shot satisfies the predefined condition of variable speed replay.

Alternatively, the motion feature parameter includes at least one of motion speed and motion frequency, in which if the motion feature parameter includes the motion speed, and the motion speed falls into a preset speed range, the motion intensity of the subject shot belongs to the preset intensity range; if the motion feature parameter includes the motion frequency, and the motion frequency falls into a preset frequency range, the motion intensity of the subject shot belongs to the preset intensity range.

Alternatively, a boundary value of the preset speed range is in positive correlation to a shooting distance of the subject shot.

Alternatively, the step of replaying the video file at a variable speed includes: playing the video file fast if a value of the motion feature parameter is smaller than a lower boundary value of the preset intensity range; and playing the video file slowly if the value of the motion feature parameter is greater than an upper boundary value of the preset intensity range.

Alternatively, the step of determining whether the subject shot in the video file satisfies a predefined condition of variable speed replay includes: determining whether each component of the subject shot satisfies the predefined condition of variable speed replay.

Alternatively, the step of determining whether the subject shot in the video file satisfies a predefined condition of variable speed replay includes: identifying a shooting scene of the video file according to a type of the subject shot or a type of an action executed by the subject shot; determining whether the subject shot in the video file satisfies the predefined condition of variable speed replay according to whether the shooting scene belongs to a preset variable speed replay scene, in which if the shooting scene belongs to the preset variable speed replay scene, it is determined that the subject shot in the video file satisfies the predefined condition of variable speed replay.

Alternatively, the step of replaying the video file at a variable speed includes: replaying a video footage containing the subject shot wholly at the variable speed.

Alternatively, the step of replaying the video file at a variable speed includes: extracting, from a video footage of the video file, play data corresponding to the subject shot or part of components of the subject shot that satisfies the predefined condition of variable speed replay; playing the play data extracted in an overlapping manner when replaying the video file.

Alternatively, the step of replaying the video file at a variable speed includes: extracting, from a video footage of the video file, play data corresponding to the subject shot or part of components of the subject shot that satisfies the predefined condition of variable speed replay; playing the play data extracted in an overlapping manner within a replay region at a preset position when replaying the video file.

Alternatively, the step of replaying the video file at a variable speed includes: extracting, from a video footage of the video file, play data corresponding to the subject shot or part of components of the subject shot that satisfies the predefined condition of variable speed replay; erasing, from the video footage, an original picture element in the video footage corresponding to the play data extracted, so as to obtain a processed video file; playing the play data extracted in an overlapping manner when replaying the processed video file.

According to a second aspect of embodiments of the present disclosure, there is provided a device for controlling playing a video file. The device includes: an obtaining unit configured to obtain a video file; a determining unit configured to determine whether a subject shot in the video file satisfies a predefined condition of variable speed replay; and a replaying unit configured to replay the video file at a variable speed, if the subject shot satisfies the predefined condition of variable speed replay.

Alternatively, the obtaining unit includes an invoking sub-unit or a receiving sub-unit, in which the invoking sub-unit is configured to invoke a camera of the device to shoot a subject; and the receiving sub-unit is configured to receive the video file obtained by shooting the subject by a camera of another device.

Alternatively, the determining unit includes: a parameter obtaining sub-unit configured to obtain a motion feature parameter of the subject shot; a parameter determining sub-unit configured to determine whether a motion intensity of the subject shot belongs to a preset intensity range according to the motion feature parameter, if yes, to determine that the subject shot satisfies the predefined condition of variable speed replay.

Alternatively, the motion feature parameter includes at least one of motion speed and motion frequency, in which if the motion feature parameter includes the motion speed, and the motion speed falls into a preset speed range, the motion intensity of the subject shot belongs to the preset intensity range; if the motion feature parameter includes the motion frequency, and the motion frequency falls into a preset frequency range, the motion intensity of the subject shot belongs to the preset intensity range.

Alternatively, a boundary value of the preset speed range is in positive correlation to a shooting distance of the subject shot.

Alternatively, the replaying unit includes: a fast playing sub-unit configured to play the video file fast, if a value of the motion feature parameter is smaller than a lower boundary value of the preset intensity range; and a slow playing sub-unit configured to play the video file slowly, if the value of the motion feature parameter is greater than an upper boundary value of the preset intensity range.

Alternatively, the determining unit includes: a partial determining sub-unit configured to determine whether each component of the subject shot satisfies the predefined condition of variable speed replay.

Alternatively, the determining unit includes: a scene identifying sub-unit configured to identify a shooting scene of the video file according to a type of the subject shot or a type of an action executed by the subject shot; and a scene determining sub-unit configured to determine whether the subject shot in the video file satisfies the predefined condition of variable speed replay according to whether the shooting scene belongs to a preset variable speed replay scene, in which if the shooting scene belongs to the preset variable speed replay scene, it is determined that the subject shot in the video file satisfies the predefined condition of variable speed replay.

Alternatively, the replaying unit includes: a whole replaying sub-unit configured to replay a video footage containing the subject shot wholly at the variable speed.

Alternatively, the replaying unit includes: a first data extracting sub-unit configured to extract, from a video footage of the video file, play data corresponding to the subject shot or part of components of the subject shot that satisfies the predefined condition of variable speed replay; and a first overlapping replaying sub-unit configured to play the play data extracted in an overlapping manner when replaying the video file.

Alternatively, the replaying unit includes: a second data extracting sub-unit configured to extract, from a video footage of the video file, play data corresponding to the subject shot or part of components of the subject shot that satisfies the predefined condition of variable speed replay; and a second overlapping replaying sub-unit configured to play the play data extracted in an overlapping manner within a replay region at a preset position when replaying the video file.

Alternatively, the replaying unit includes: a third data extracting sub-unit configured to extract, from a video footage of the video file, play data corresponding to the subject shot or part of components of the subject shot that satisfies the predefined condition of variable speed replay; an element erasing sub-unit configured to erase, from the video footage, an original picture element in the video footage corresponding to the play data extracted, so as to obtain a processed video file; and a third overlapping replaying sub-unit configured to play the play data extracted in an overlapping manner when replaying the processed video file.

According to a third aspect of embodiments of the present disclosure, there is provided an electronic equipment. The electronic equipment includes: a processor; and a memory configured to store an instruction executable by the processor. The processor is configured to obtain a video file, to determine whether a subject shot in the video file satisfies a predefined condition of variable speed replay, and if yes, to replay the video file at a variable speed.

According to the embodiments of the present disclosure, the technical solution has the following effects.

In the shooting process, the subject shot is analyzed to determine whether to satisfy the condition of variable speed replay, such that the video file can be replayed at the variable speed automatically. Therefore, the user can observe the subject shot clearly via automatic slow replay when the subject shot moves fast, and can quickly browse the overall motion situation of the subject shot via automatic fast replay when the subject shot moves slowly, so as to improve the viewing experience.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart of a method for controlling playing a video file according to an exemplary embodiment.
Fig. 2 is a schematic diagram of a video shooting scene according to an exemplary embodiment.
Fig. 3 is a schematic diagram of another video shooting scene according to an exemplary embodiment.
Fig. 4 is a flow chart of another method for controlling playing a video file according to an exemplary embodiment.
Figs. 5-8 show schematic diagrams of a video footage according to an exemplary embodiment.
Figs. 9-11 show schematic diagrams of playing at a variable speed according to an exemplary embodiment.
Figs. 12-21 are block diagrams of a device for controlling playing a video file according to an exemplary embodiment.
Fig. 22 is a schematic diagram of a device for controlling playing a video file according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

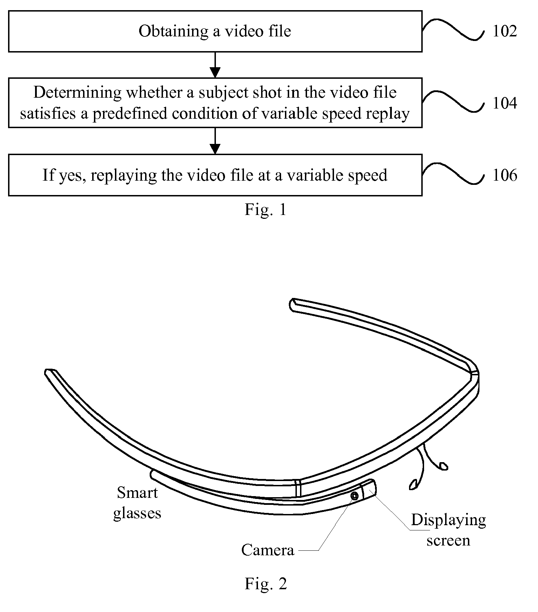

Fig. 1 is a flow chart of a method for controlling playing a video file according to an exemplary embodiment. As shown in Fig. 1, the method may be used for a wearable device, and include the following steps.

In step 102, a video file is obtained.

In this embodiment, the wearable device may be smart glasses, and can automatically infer whether to play the video file at a variable speed by shooting the subject, along with conditional judgment, so as to optimize the viewing process of the user.

Take the smart glasses as an example. As an exemplary embodiment, the subject may be shot directly by the smart glasses. Referring to Fig. 2, as an exemplary embodiment, the smart glasses is equipped with a camera and a displaying screen, such that the smart glasses can directly invoke its own camera to shoot the subject, and replay at the variable speed on the displaying screen when the subject shot satisfies a condition of variable speed replay.

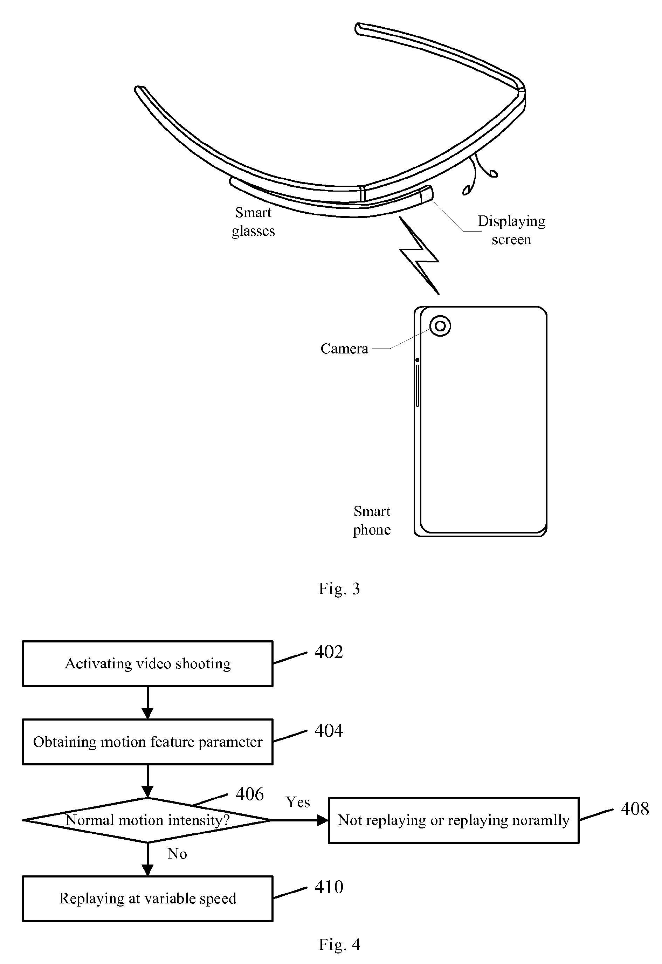

As another exemplary embodiment, the smart glasses may cooperate with another device for shooting. As shown in Fig. 3, as another exemplary embodiment, it is possible that the smart glasses is not provided with any camera, but is only provided with a displaying screen. In such a case, a camera of another device (like a smart phone) may shoot the subject to obtain a video file, and the smart glasses only needs to receive the video file. Even if the smart glasses possesses its own camera, another device, like the smart phone, may shoot the video when being equipped with a better camera, and then transmit the video file to the smart glasses to realize the variable speed replay.

The video file may be transmitted between the smart glasses and the smart phone in a wireless manner, such as Bluetooth. Of course, any wireless or wired data transmission mode may be applied to the technical solution of the present disclosure which does not limit the transmission mode.

In step 104, it is determined whether a subject shot in the video file satisfies a predefined condition of variable speed replay.

In this embodiment, there are various ways to determine whether the predefined condition of variable speed replay is satisfied, such as a motion intensity range, a shooting scene, and the like, which will be described in detail in the following.

In step 106, if the predefined condition of variable speed replay is satisfied, the video file is replayed at the variable speed.

It is known from the above embodiment that in the shooting process, the subject shot is analyzed to determine whether to satisfy the condition of variable speed replay, such that the video file can be replayed at the variable speed automatically. Therefore, the user can observe the subject shot clearly via automatic slow replay when the subject shot moves fast, and can quickly browse the overall motion situation of the subject shot via automatic fast replay when the subject shot moves slowly, so as to improve the viewing experience.

The technical solution of the present disclosure has many implementations concerning the judgment on the condition of variable speed replay in step 104 and the realization of variable speed replay in step 106. In the following, each processing feature will be illustrated respectively

The following embodiments each take "smart glasses" for example for the convenience of description, but it shall be understood by those skilled in the art that the technical solution of the present disclosure can be applied to other non-wearable electronic equipments, so long as the electronic equipments have functions of processing information and displaying images (like a displaying screen), and are capable of identifying the subject shot and determining whether the subject shot satisfies the condition.

1. Judgment on the condition of variable speed replay

1.1 Based on motion feature parameters

Fig. 4 is a flow chart of a method for controlling playing according to an exemplary embodiment. As shown in Fig. 4, the method may include the following steps.

In step 402, a video shooting function of the smart glasses is activated to execute the operation of shooting a subject.

In step 404, a motion feature parameter of the subject shot is obtained.

In step 406, it is determined whether a motion intensity of the subject shot belongs to a preset intensity range according to the motion feature parameter (i.e. "if it is normal"). If yes, step 408 is carried out, but if no, step 410 is conducted.

In this embodiment, when the motion intensity of the subject shot is too high, it is possible that the user cannot clearly see the motion situation of the subject shot; when the motion intensity of the subject shot is too low, it may take a long time for the user to observe the motion process of the subject shot, in both of which the user cannot enjoy good viewing experience.

The process of determining the motion intensity of the subject shot according to the value of the motion feature parameter relies on the type of the motion feature parameter, and different types cause certain differences.

### 1) Motion speed

Two conditions - too fast or too slow exist in terms of the motion speed, and here the condition of "too fast" is taken as an example for illustration. Since the "visual persistence" t of human eyes lasts about 0.1 to 0.4 seconds, the motion duration of the subject shot in the vision field of the user may be less than t when the motion speed of the subject shot is too high, such that the user cannot observe or even identify the subject shot.

Therefore, the duration from the subject shot entering the vision field of the user to leaving the vision field should be longer than t, to ensure that the motion intensity of the subject shot belongs to the preset intensity range, such that the user may identify and normally observe the subject.

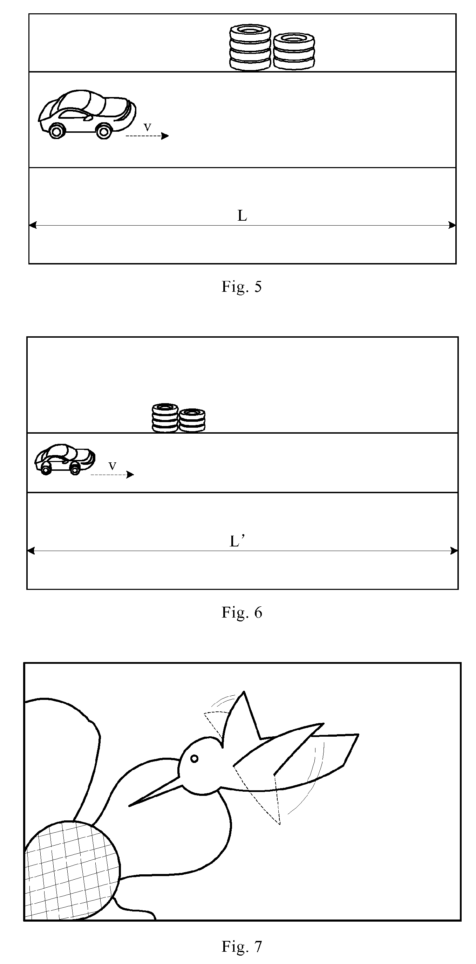

In order to meet the requirement about duration, the actual motion speed of the subject shot and the shooting distance to the subject shot both should be taken into consideration. For instance, Fig. 5 shows a vision field of a user watching a car racing, in which the actual motion speed of the car is v, and the actual length of the motion track in the vision field of the user considering the current shooting distance of the car (the distance between the camera and the car) is L, such that the duration for which the car passes the vision field of the user is T=L/v, and only if T>t is guaranteed, the user can clearly watch the motion situation of the car. Correspondingly, in the case of the shooting distance and the vision field of the user shown in Fig. 5, an upper boundary value of "a preset intensity range" (equivalent to "a preset speed range" herein) is L/t. That is, the user may clearly observe the motion situation of the car, as long as the actual motion speed v of the car is less than L/t, otherwise, the video file should be replayed slowly.

When the shooting distance of the car is increased, accordingly the vision field of the user is as shown in Fig. 6. The actual length of the motion track of the car in the vision field of the user is increased to L', and thus the upper boundary value of "the preset intensity range" is increased to L'/t. That is, the user may clearly observe the motion situation of the car, as long as the actual motion speed v of the car is less than L'/t, otherwise, the video file should be replayed slowly.

### 2) Motion frequency

Likewise, two conditions - too fast or too slow exist in terms of the motion frequency, and here the condition of "too fast" is taken as an example for illustration. Since the "visual persistence" t of human eyes lasts about 0.1 to 0.4 seconds, the user cannot observe or even identify the subject shot, if the motion frequency of the subject shot in the vision field of the user is greater than F=25 times per second.

For instance, Fig. 7 shows a vision field of a user observing a hummingbird flying. In the whole observation process, the hummingbird may remain in the vision field of the user, but the user still cannot normally observe the flying process of the hummingbird when the frequency of flapping the wings usually exceeds 50 times per second, and even reaches hundreds times per second. Through observation, the frequency of flapping wings of "the hummingbird" shot is f. When f is greater than F, it is determined that the motion intensity goes beyond the preset intensity range (equivalent to "a preset frequency range" herein, and F being the upper boundary value of the preset frequency range), and the video file needs to be replayed slowly to optimize the user's viewing experience.

It shall be noted that the condition of "too fast" is taken as example for illustration of the motion speed and the motion frequency; similarly, "the preset intensity range" may have a lower boundary value - when the motion speed or motion frequency is smaller than the lower boundary value, it is determined that the motion intensity is too low and the video file needs to be replayed fast to optimize the viewing experience. The lower boundary value is in positive correlation to the shooting distance when it is set in terms of the motion speed.

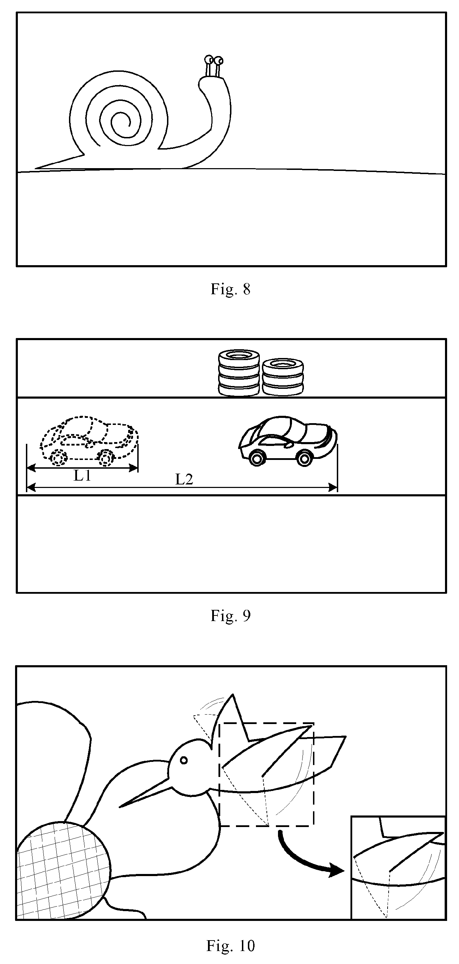

For instance, Fig. 8 shows a vision field of a user observing a snail crawling. It may take tens of minutes for the snail to pass the vision field of the user, which is not good for overall viewing and evaluation of the whole motion process. Consequently, the crawling process of the snail may be replayed fast, such that the user finishes watching the whole crawling process in a short time for better observation of the motion track and motion situation of the snail.

In step 408, the video file is not replayed or is replayed normally.

In step 410, the video file is replayed at a variable speed.

The above description is concerned with the embodiment where the motion intensity of the subject shot is judged according to comparison of the motion feature parameters, and it is determined finally whether the video file needs to be played at the variable speed. If the value of the motion feature parameter is smaller than the lower boundary value of the preset intensity range, the video file is played fast; if the value of the motion feature parameter is greater than the upper boundary value of the preset intensity range, the video file is played slowly.

### 1.2 Based on shooting scenes

The smart glasses may identify a shooting scene of the video file according to a type of the subject shot or a type of an action executed by the subject shot, and determine whether the subject shot in the video file satisfies the predefined condition of variable speed replay according to whether the shooting scene belongs to a preset variable speed replay scene.

In this embodiment, a scene which needs to be replayed at a variable speed is defined in advance, i.e. "the preset variable speed replay scene", and the identification feature of each preset variable speed replay scene is set, such as a type of the subject shot or a type of an action executed by the subject shot. Hence, the shooting scene of the video file may be determined accordingly.

As for the shooting scene of the car racing in Fig. 5, the shooting scene which needs to be replayed slowly may be determined in advance, and a feature of "a racing car" and a "driving" action of the car are configured as identification features of the current shooting scene. It may be determined that the current shooting scene needs to be replayed at the variable speed and more specifically replayed slowly, once the smart glasses identifies that the current subject shot is a racing car and the car is in a driving status.

Similarly, as for the shooting scene of snail crawling in Fig. 8, the shooting scene which needs to be replayed fast may be determined in advance, and a feature of a snail is taken as the identification feature of the current shooting scene. It may be determined that the current shooting scene needs to be replayed at the variable speed and more specifically replayed fast, as long as the smart glasses identifies that the current subject shot is a snail.

### 2. Variable speed replay

There are various forms to replay a video file at a variable speed. Several possible forms are illustrated in the following, but the present disclosure is not limited thereby.

### 2.1 Overlapping replay

From a video footage of the video file, play data corresponding to the subject shot or part of components of the subject shot that satisfies the predefined condition of variable speed replay is extracted; and then the play data extracted is played in an overlapping manner when the video file is replayed.

As shown in Fig. 9, the subject shot is a vehicle, and the vehicle in dotted lines at the left side of Fig. 9 represents a picture element extracted from the video footage. The picture elements extracted from all the video footages constitute the play data extracted. The vehicle in solid lines at the right side of Fig. 9 represents an original picture element in the video file. Hence, in the process of variable speed replay, the left vehicle in dotted lines (i.e. the picture element extracted) is superposed onto and displayed with the video footage containing the right vehicle in solid lines, so as to acquire the displaying image finally shown in Fig. 9, which can be played on the displaying screen of the smart glasses in Fig. 2 or Fig. 3.

It may be known from Fig. 9 that due to slow replay, the driving distance of the right vehicle in solid lines is L2 while the driving distance of the left vehicle in dotted lines is only L1, such that the user may observe the driving process of the vehicle carefully.

It should be noted that as the description of play data corresponding to part of components of the subject shot that satisfies the predefined condition of variable speed replay, since not every subject shot is the same as the vehicle in Fig. 9 which generates intensive motion on the whole, it is possible to determine whether each component of the subject shot satisfies the predefined condition of variable speed replay, and to replay, at the variable speed, the component that satisfies the predefined condition of variable speed replay, when it is judged whether the subject shot satisfies the predefined condition of variable speed replay.

As shown in Fig. 10, when the hummingbird suspends in the air, only the motion frequency of wings is greater than the preset frequency range, and thus the wing region of the hummingbird may be extracted for slow replay. Of course, if the picture element extracted is superposed onto and displayed with the original picture element, without any substantial change in the position of the subject shot, the wing motion replayed slowly may interfere with the original wing motion, which will affect the observation of the user. In order to solve the problem, the following playing method may be employed.

1) From a video footage (i.e. a video frame) of the video file, play data corresponding to the subject shot or part of components of the subject shot that satisfies the predefined condition of variable speed replay is extracted; and then the play data extracted is played in an overlapping manner within a replay region at a preset position when the video file is replayed.

For example, as shown in Fig. 10, the preset position may be the lower right corner of the vision field of the user, or any other position, and it should be ensured that the preset position will not block the original picture element. Thus, the user may watch the video file played normally and the play data replayed slowly at the preset position simultaneously, so as to realize comparative observation of the both.

2) Play data corresponding to the subject shot or part of components of the subject shot that satisfies the predefined condition of variable speed replay is extracted from a video footage of the video file; an original picture element in the video footage corresponding to the play data extracted is erased from the video footage, so as to obtain a processed video file; the play data extracted is replayed in an overlapping manner when the processed video file is replayed.

In this embodiment, the original picture element may be directly erased from the video file in order to avoid interference between the picture element extracted and the original picture element, which will not degrade the user viewing experience, since the user expects to see the picture element replayed at the variable speed.

### 2.2 Wholly variable speed replay

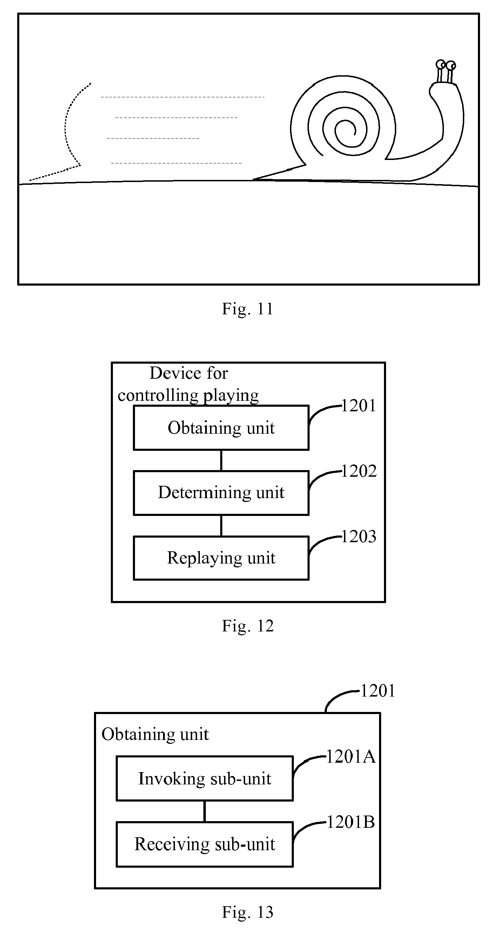

As an exemplary embodiment, a video footage containing the subject shot may be replayed wholly at the variable speed. As shown in Fig. 11, the video file corresponding to the snail crawling may be directly wholly replayed fast, which does not need any complicated processing of the video footage of the video file.

The present disclosure further provides an embodiment of a device for controlling playing corresponding to the embodiment of the method for controlling playing.

Fig. 12 is a block diagram of a device for controlling playing according to an exemplary embodiment. Referring to Fig. 12, the device includes: an obtaining unit 1201, a determining unit 1202 and a replaying unit 1203, in which the obtaining unit 1201 is configured to shoot a subject to generate a corresponding video file; the determining unit 1202 is configured to determine whether the subject shot in the video file satisfies a predefined condition of variable speed replay; the replaying unit 1203 is configured to replay the video file at a variable speed, if the subject shot satisfies the predefined condition of variable speed replay.

As shown in Fig. 13 that is a block diagram of another device for controlling playing a video file according to an exemplary embodiment, this embodiment is based on the embodiment shown in Fig. 12. The obtaining unit 1201 may include: an invoking sub-unit 1201A or a receiving sub-unit 1201B, in which the invoking sub-unit 1201A is configured to invoke a camera of the device to shoot a subject; and the receiving sub-unit 1201B is configured to receive the video file obtained by shooting the subject by a camera of another device.

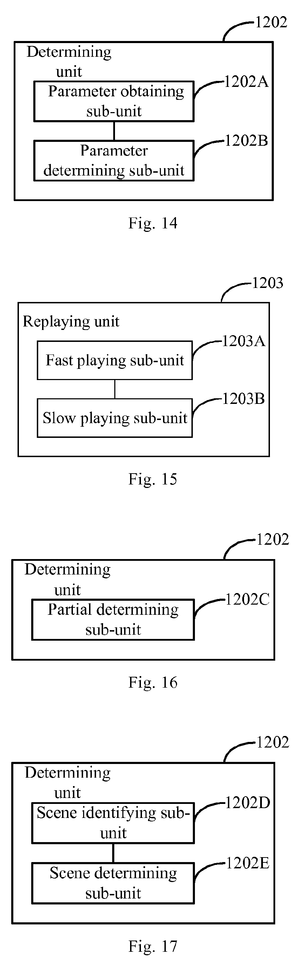

As shown in Fig. 14 that is a block diagram of another device for controlling playing a video file according to an exemplary embodiment, this embodiment is based on the embodiment shown in Fig. 12. The determining unit 1202 may include: a parameter obtaining sub-unit 1202A and a parameter determining sub-unit 1202B, in which the parameter obtaining sub-unit 1202A is configured to obtain a motion feature parameter of the subject shot; the parameter determining sub-unit 1202B is configured to determine whether a motion intensity of the subject shot belongs to a preset intensity range, according to the motion feature parameter, if yes, to determine that the subject shot satisfies the predefined condition of variable speed replay.

Alternatively, the motion feature parameter includes at least one of motion speed and motion frequency, in which if the motion feature parameter includes the motion speed, and the motion speed falls into a preset speed range, the motion intensity of the subject shot belongs to the preset intensity range; if the motion feature parameter includes the motion frequency, and the motion frequency falls into a preset frequency range, the motion intensity of the subject shot belongs to the preset intensity range.

Alternatively, a boundary value of the preset speed range is in positive correlation to a shooting distance of the subject shot.

It shall be noted that the structures of the parameter obtaining sub-unit 1202A and the parameter determining sub-unit 1202B shown in the embodiment of Fig. 14 may be contained in the embodiment of Fig. 13, which the present disclosure will not limit.

As shown in Fig. 15 that is a block diagram of another device for controlling playing according to an exemplary embodiment, this embodiment is based on the embodiment shown in Fig. 14. The replaying unit 1203 may include a fast playing sub-unit 1203A and a slow playing sub-unit 1203B, in which the fast playing sub-unit 1203A is configured to play the video file fast, if a value of the motion feature parameter is smaller than a lower boundary value of the preset intensity range; and the slow playing sub-unit 1203B is configured to play the video file slowly, if the value of the motion feature parameter is greater than an upper boundary value of the preset intensity range.

As shown in Fig. 16 that is a block diagram of another device for controlling playing a video file according to an exemplary embodiment, this embodiment is based on the embodiment shown in Fig. 12. The determining unit 1202 may include: a partial determining sub-unit 1202C configured to determine whether each component of the subject shot satisfies the predefined condition of variable speed replay.

It shall be noted that the structure of the partial determining sub-unit 1202C shown in the embodiment of Fig. 16 may be contained in the embodiments of Fig. 13 to Fig. 15, which the present disclosure will not limit.

As shown in Fig. 17 that is a block diagram of another device for controlling playing according to an exemplary embodiment, this embodiment is based on the embodiment shown in Fig. 12. The determining unit 1202 may include: a scene identifying sub-unit 1202D and a scene determining sub-unit 1202E, in which the scene identifying sub-unit 1202D is configured to identify a shooting scene of the video file according to a type of the subject shot or a type of an action executed by the subject shot; the scene determining sub-unit 1202E is configured to determine whether the subject shot in the video file satisfies the predefined condition of variable speed replay, according to whether the shooting scene belongs to a preset variable speed replay scene, in which if the shooting scene belongs to the preset variable speed replay scene, it is determined that the subject shot in the video file satisfies the predefined condition of variable speed replay.

It shall be noted that the structures of the scene identifying sub-unit 1202D and the scene determining sub-unit 1202E shown in the embodiment of Fig. 17 may be contained in the embodiments of Fig. 13 to Fig. 16, which the present disclosure will not limit.

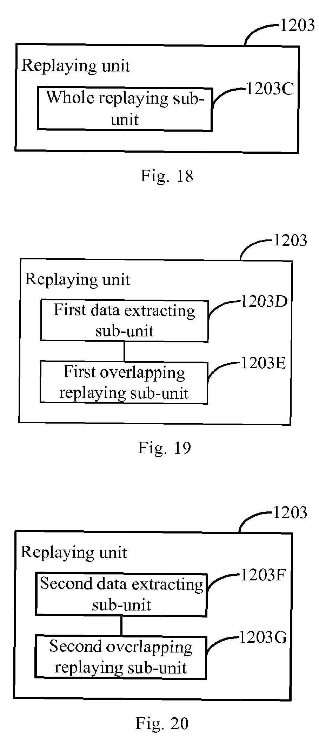

As shown in Fig. 18 that is a block diagram of another device for controlling playing according to an exemplary embodiment, this embodiment is based on the embodiment shown in Fig. 12. The replaying unit 1203 may include a whole replaying sub-unit 1203C configured to replay a video footage containing the subject shot wholly at the variable speed.

It shall be noted that the structure of the whole replaying sub-unit 1203C shown in the embodiment of Fig. 18 may be contained in the embodiments of Fig. 13 to Fig. 17, which the present disclosure will not limit.

As shown in Fig. 19 that is a block diagram of another device for controlling playing according to an exemplary embodiment, this embodiment is based on the embodiment shown in Fig. 12. The replaying unit 1203 may include: a first data extracting sub-unit 1203D and a first overlapping replaying sub-unit 1203E, in which the first data extracting sub-unit 1203D is configured to extract, from a video footage of the video file, play data corresponding to the subject shot or part of components of the subject shot that satisfies the predefined condition of variable speed replay; the first overlapping replaying sub-unit 1203E is configured to play the play data extracted in an overlapping manner when replaying the video file.

It shall be noted that the structures of the first data extracting sub-unit 1203D and the first overlapping replaying sub-unit 1203E shown in the embodiment of Fig. 19 may be contained in the embodiments of Fig. 13 to Fig. 18, which the present disclosure will not limit.

As shown in Fig. 20 that is a block diagram of another device for controlling playing a video file according to an exemplary embodiment, this embodiment is based on the embodiment shown in Fig. 12. The replaying unit 1203 may include: a second data extracting sub-unit 1203F and a second overlapping replaying sub-unit 1203G, in which the second data extracting sub-unit 1203F is configured to extract, from a video footage of the video file, play data corresponding to the subject shot or part of components of the subject shot that satisfies the predefined condition of variable speed replay; the second overlapping replaying sub-unit 1203G is configured to play the play data extracted in an overlapping manner within a replay region at a preset position when replaying the video file.

It shall be noted that the structures of the second data extracting sub-unit 1203F and the second overlapping replaying sub-unit 1203G shown in the embodiment of Fig. 20 may be contained in the embodiments of Fig. 13 to Fig. 19, which the present disclosure will not limit.

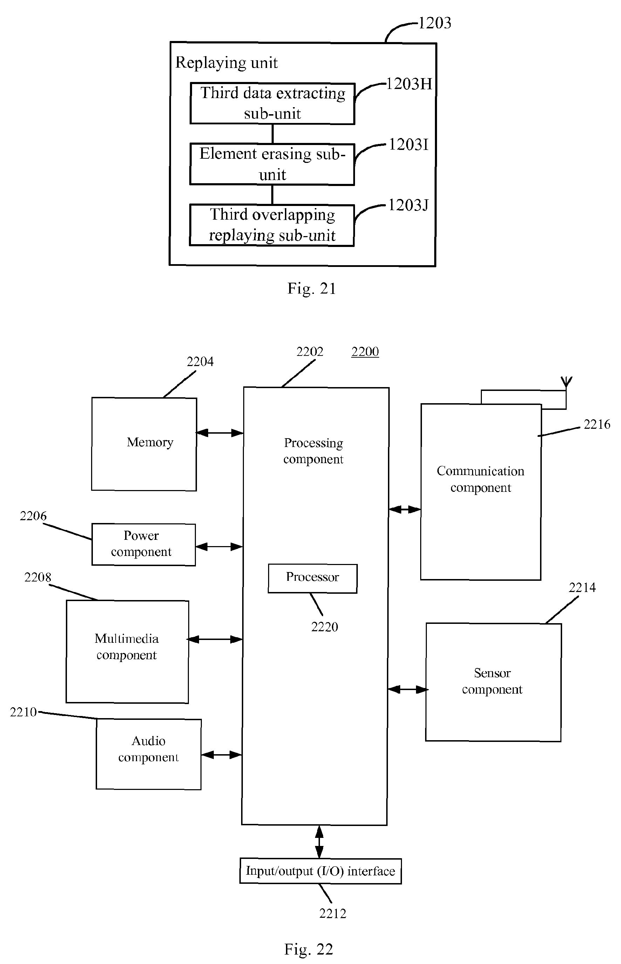

As shown in Fig. 21 that is a block diagram of another device for controlling playing according to an exemplary embodiment, this embodiment is based on the embodiment shown in Fig. 12. The replaying unit 1203 may include: a third data extracting sub-unit 1203H, an element erasing sub-unit 1203I and a third overlapping replaying sub-unit 1203J, in which the third data extracting sub-unit 1203H is configured to extract, from a video footage of the video file, play data corresponding to the subject shot or part of components of the subject shot that satisfies the predefined condition of variable speed replay; the element erasing sub-unit 1203I is configured to erase, from the video footage, an original picture element in the video footage corresponding to the play data extracted, so as to obtain a processed video file; the third overlapping replaying sub-unit 1203J is configured to play the play data extracted in an overlapping manner when replaying the processed video file.

It shall be noted that the structures of the third data extracting sub-unit 1203H, the element erasing sub-unit 1203I and the third overlapping replaying sub-unit 1203J shown in the embodiment of Fig. 21 may be contained in the embodiments of Fig. 13 to Fig. 20, which the present disclosure will not limit.

With respect to the devices in the above embodiments, the specific manners for performing operations for individual modules therein have been described in detail in the embodiments regarding the methods for controlling playing a video file, which will not be elaborated herein.

The device embodiment is substantially corresponding to the method embodiment, so relevant part of illustration of the method embodiment may be referred to. The device embodiment described above is only exemplary, in which the units described as separate components may be or may not be physically separate; the component as the displaying unit may be or not be a physical unit, i.e. may be located at a position or be distributed at many network elements. It is possible to select part of or all of the modules to realize the objective of the present disclosure, which may be understood and implemented by those skilled in the art without paying more creative effort.

Accordingly, the present disclosure further provides a device for controlling playing. The device includes a processor and a memory configured to store an instruction executable by the processor, in which the processor is configured to shoot a subject and generate a corresponding video file; and to determine whether the subject shot in the video file satisfies a predefined condition of variable speed replay, if yes, to replay the video file at a variable speed.

Accordingly, the present disclosure further provides a terminal. The terminal includes a memory and one or more programs which are stored in the memory. One or more of the processors are configured to execute the instructions for the following operations contained in the one or more programs: shooting a subject and generating a corresponding video file; determining whether the subject shot in the video file satisfies a predefined condition of variable speed replay; if yes, replaying the video file at a variable speed.

Fig. 22 is a block diagram of a device 2200 for controlling playing a video file according to an exemplary embodiment. For example, the device 2200 may be a mobile phone, a computer, a digital broadcast terminal, a messaging device, a gaming console, a tablet, a medical device, exercise equipment, a personal digital assistant, a wearable device (like smart glasses) and the like.

Referring to Fig. 22, the device 2200 may include one or more of the following components: a processing component 2202, a memory 2204, a power component 2206, a multimedia component 2208, an audio component 2210, an input/output (I/O) interface 2212, a sensor component 2214, and a communication component 2216.

The processing component 2202 typically controls overall operations of the device 2200, such as the operations associated with display, telephone calls, data communications, camera operations, and recording operations. The processing component 2202 may include one or more processors 2220 to execute instructions to perform all or part of the steps in the above described methods. Moreover, the processing component 2202 may include one or more modules which facilitate the interaction between the processing component 2202 and other components. For instance, the processing component 2202 may include a multimedia module to facilitate the interaction between the multimedia component 2208 and the processing component 2202.

The memory 2204 is configured to store various types of data to support the operation of the device 2200. Examples of such data include instructions for any applications or methods operated on the device 2200, contact data, phonebook data, messages, pictures, video, etc. The memory 2204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2206 provides power to various components of the device 2200. The power component 2206 may include a power management system, one or more power sources, and any other components associated with the generation, management, and distribution of power in the device 2200.

The multimedia component 2208 includes a screen providing an output interface between the device 2200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2208 includes a front camera and/or a rear camera. The front camera and the rear camera may receive an external multimedia datum while the device 2200 is in an operation mode, such as a photographing mode or a video mode. Each of the front camera and the rear camera may be a fixed optical lens system or have focus and optical zoom capability.

The audio component 2210 is configured to output and/or input audio signals. For example, the audio component 2210 includes a microphone ("MIC") configured to receive an external audio signal when the device 2200 is in an operation mode, such as a call mode, a recording mode, and a voice recognition mode. The received audio signal may be further stored in the memory 2204 or transmitted via the communication component 2216. In some embodiments, the audio component 2210 further includes a speaker to output audio signals.

The I/O interface 2212 provides an interface between the processing component 2202 and peripheral interface modules, such as a keyboard, a click wheel, buttons, and the like. The buttons may include, but are not limited to, a home button, a volume button, a starting button, and a locking button.

The sensor component 2214 includes one or more sensors to provide status assessments of various aspects of the device 2200. For instance, the sensor component 2214 may detect an open/closed status of the device 2200, relative positioning of components, e.g., the display and the keypad, of the device 2200, a change in position of the device 2200 or a component of the device 2200, a presence or absence of user contact with the device 2200, an orientation or an acceleration/deceleration of the device 2200, and a change in temperature of the device 2200. The sensor component 2214 may include a proximity sensor configured to detect the presence of nearby objects without any physical contact. The sensor component 2214 may also include a light sensor, such as a CMOS or CCD image sensor, for use in imaging applications. In some embodiments, the sensor component 2214 may also include an accelerometer sensor, a gyroscope sensor, a magnetic sensor, a pressure sensor, or a temperature sensor.

The communication component 2216 is configured to facilitate communication, wired or wirelessly, between the device 2200 and other devices. The device 2200 can access a wireless network based on a communication standard, such as WiFi, 2G, or 3G, or a combination thereof. In one exemplary embodiment, the communication component 2216 receives a broadcast signal or broadcast associated information from an external broadcast management system via a broadcast channel. In one exemplary embodiment, the communication component 2216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 2204, executable by the processor 2220 in the device 2200, for performing the above-described methods. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for controlling playing a video file, comprising:
obtaining a video file (102);
determining (104) whether a subject shot in the video file satisfies a predefined condition of variable speed replay;
if yes, replaying (106) the video file at a variable speed.

2. The method according to claim 1, wherein obtaining the video file includes:
invoking a camera of a device to shoot the subject; or
receiving the video file obtained by shooting the subject by a camera of another device.

3. The method according to claim 1, wherein determining whether the subject shot in the video file satisfies the predefined condition of variable speed replay includes:
obtaining a motion feature parameter (404) of the subject shot;
determining (406) whether a motion intensity of the subject shot belongs to a preset intensity range according to the motion feature parameter, if yes, determining that the subject shot satisfies the predefined condition of variable speed replay.

4. The method according to claim 3, wherein the motion feature parameter includes at least one of motion speed and motion frequency;
wherein if the motion feature parameter includes the motion speed, and the motion speed falls into a preset speed range, the motion intensity of the subject shot belongs to the preset intensity range; if the motion feature parameter includes the motion frequency, and the motion frequency falls into a preset frequency range, the motion intensity of the subject shot belongs to the preset intensity range.

5. The method according to claim 4, wherein a boundary value of the preset speed range is in positive correlation to a shooting distance of the subject shot.

6. The method according to claim 3, wherein replaying the video file at a variable speed, includes:
playing the video file fast if a value of the motion feature parameter is smaller than a lower boundary value of the preset intensity range;
playing the video file slowly if the value of the motion feature parameter is greater than an upper boundary value of the preset intensity range.

7. The method according to claim 1, wherein determining whether the subject shot in the video file satisfies a predefined condition of variable speed replay, includes:
determining whether each component of the subject shot satisfies the predefined condition of variable speed replay.

8. The method according to claim 1, wherein determining whether the subject shot in the video file satisfies a predefined condition of variable speed replay includes:
identifying a shooting scene of the video file according to a type of the subject shot or a type of an action executed by the subject shot;
determining whether the subject shot in the video file satisfies the predefined condition of variable speed replay according to whether the shooting scene belongs to a preset variable speed replay scene, wherein if the shooting scene belongs to the preset variable speed replay scene, it is determined that the subject shot in the video file satisfies the predefined condition of variable speed replay.

9. The method according to claim 1, wherein replaying the video file at a variable speed includes:
replaying a video footage containing the subject shot wholly at the variable speed.

10. The method according to claim 1, wherein replaying the video file at a variable speed includes:
extracting, from a video footage of the video file, play data corresponding to the subject shot or part of components of the subject shot that satisfies the predefined condition of variable speed replay;
playing the play data extracted in an overlapping manner when replaying the video file.

11. The method according to claim 1, wherein replaying the video file at a variable speed includes:
extracting, from a video footage of the video file, play data corresponding to the subject shot or part of components of the subject shot that satisfies the predefined condition of variable speed replay;
playing the play data extracted in an overlapping manner within a replay region at a preset position when replaying the video file.

12. The method according to claim 1, wherein replaying the video file at a variable speed includes:
extracting, from a video footage of the video file, play data corresponding to the subject shot or part of components of the subject shot that satisfies the predefined condition of variable speed replay;
erasing, from the video footage, an original picture element in the video footage corresponding to the play data extracted, so as to obtain a processed video file;
playing the play data extracted in an overlapping manner when replaying the processed video file.

13. A device for controlling playing a video file, comprising:
an obtaining unit (1201) configured to obtain a video file;
a determining unit (1202) configured to determine whether a subject shot in the video file satisfies a predefined condition of variable speed replay; and
a replaying unit (1203) configured to replay the video file at a variable speed, if the subject shot satisfies the predefined condition of variable speed replay.

14. The device according to claim 13, wherein the obtaining unit includes an invoking sub-unit or a receiving sub-unit;
wherein the invoking sub-unit (1201A) is configured to invoke a camera of the device to shoot a subject; and the receiving sub-unit (1201B) is configured to receive the video file obtained by shooting the subject by a camera of another device; and/or
wherein the determining unit includes:
a parameter obtaining sub-unit configured to obtain a motion feature parameter of the subject shot;
a parameter determining sub-unit (1202A) configured to determine whether a motion intensity of the subject shot belongs to a preset intensity range according to the motion feature parameter, if yes, to determine that the subject shot satisfies the predefined condition of variable speed replay.

15. An electronic equipment, comprising:
a processor (2220);
a memory (2204) configured to store an instruction executable by the processor;
wherein the processor is configured to:
obtain a video file;
determine whether a subject shot in the video file satisfies a predefined condition of variable speed replay;
if yes, replay the video file at a variable speed.
